# EUROPÄISCHE PATENTANMELDUNG

(11) **EP 4 480 620 A1**
(43) Veröffentlichungstag der Anmeldung: **25.12.2024**
(21) Anmeldenummer: 23180252.1
(22) Anmeldetag: 20.06.2023
(51) Int. Cl.: B23K 9/09, B23K 9/12

(54) **VERFAHREN ZUM STEUERN UND/ODER REGELN EINES IMPULSLICHTBOGENSCHWEISSPROZESSES SOWIE SCHWEISSVORRICHTUNG ZUR DURCHFÜHRUNG EINES IMPULSLICHTBOGENSCHWEISSPROZESSES**

(71) Anmelder: FRONIUS INTERNATIONAL GmbH, 4643 Pettenbach (AT)
(72) Erfinder: SÖLLINGER, Dominik, 4643 Pettenbach (AT); WALDHÖR, Andreas, 4643 Pettenbach (AT); MAYER, Manuel, 4643 Pettenbach (AT)
(74) Vertreter: SONN Patentanwälte GmbH & Co KG

(57) **Zusammenfassung**

Die Erfindung betrifft ein Verfahren zum Steuern und/oder Regeln eines Impulslichtbogenschweißprozesses, mit einem abschmelzenden Schweißdraht (4) an einem Werkstück (W), wobei zur Bildung eines Lichtbogens (L) und Ablösung von Tropfen (T) des abgeschmolzenen Schweißdrahts (4) Stromimpulse periodisch mit einer vorgegebenen Schweißfrequenz (f) und einem gegenüber einem Grundstrom (I_{G}) erhöhten Pulsstrom (I_{P}) angelegt werden, und der abschmelzende Schweißdraht (4) mit einer vorgegebenen Vorwärtsgeschwindigkeit (v_{D,V}) in Richtung Werkstück (W) bewegt wird, sowie eine Schweißvorrichtung (1) zur Durchführung eines Impulslichtbogenschweißprozesses, mit einer Schweißstromquelle (2), einem Schweißbrenner (3) zur Zuführung eines abschmelzenden Schweißdrahts (4) zu einem Werkstück (W) und einer Steuereinrichtung (9). Erfindungsgemäß ist vorgesehen, dass der Schweißdraht (4) mit einer vorgegebenen Rückwärtsgeschwindigkeit (v_{D,R}) vom Werkstück (W) wegbewegt wird, nachdem ein Kurzschluss (KS) zwischen Schweißdraht (4) und Werkstück (W) detektiert wird, und der Schweißdraht (5) wieder in Richtung Werkstück (W) bewegt wird, nachdem ein Aufbrechen des Kurzschlusses (KS) detektiert wird.

## Beschreibung

Die Erfindung betrifft ein Verfahren zum Steuern und/oder Regeln eines Impulslichtbogenschweißprozesses, mit einem abschmelzenden Schweißdraht an einem Werkstück, wobei zur Bildung eines Lichtbogens und Ablösung von Tropfen des abgeschmolzenen Schweißdrahts Stromimpulse periodisch mit einer vorgegebenen Schweißfrequenz und einem gegenüber einem Grundstrom erhöhten Pulsstrom angelegt werden, und der abschmelzende Schweißdraht mit einer vorgegebenen Vorwärtsgeschwindigkeit in Richtung Werkstück bewegt wird.

Weiters betrifft die Erfindung eine Schweißvorrichtung zur Durchführung eines Impulslichtbogenschweißprozesses, mit einer Schweißstromquelle, einem Schweißbrenner zur Zuführung eines abschmelzenden Schweißdrahts zu einem Werkstück und einer Steuereinrichtung zum Steuern und/oder Regeln von Schweißparametern während des Impulslichtbogenschweißprozesses.

Die Erfindung betrifft Schweißverfahren mit abschmelzbarem Schweißdraht (MIG/MAG-Schweißverfahren), speziell Impulsschweißverfahren und Sprühlichtbogenschweißverfahren, bei welchen der Schweißdraht mit einer im Wesentlichen konstanten Vorschubgeschwindigkeit in Richtung Werkstück befördert wird und periodisch Stromimpulse zur Unterstützung der Tropfenablösung angelegt werden. Impulslichtbogenschweißverfahren werden bei verschiedenen Materialien (Stahl, Edelstahl, Aluminium) in unterschiedlichen Leistungsbereichen, insbesondere bei höheren Abschmelzleistungen und automatisierten Schweißverfahren ab ca. 2 mm Blechstärke eingesetzt. Auch Varianten von Pulsschweißverfahren, wie zum Beispiel AC Pulsschweißverfahren, bei welchen der Schweißstrom in der Grundstromphase auf einen negativen Wert umgepolt wird oder Pulsschweißprozesse, bei welchen neben den Stromimpulsen und Grundstromphasen noch weitere Stromformen angelegt werden, sind eingeschlossen. Auch Zweidrahtlösungen, bei welchen mit zwei Schweißdrähten gearbeitet wird, können unter die vorliegende Erfindung fallen. Beispielsweise werden beim sogenannten Twin-Schweißverfahren zwei unabhängig arbeitende Lichtbogenschweißverfahren mit zwei Schweißdrähten in einem Prozess kombiniert.

Beim Impulslichtbogenschweißen werden periodisch Stromimpulse mit einer vorgegebenen Schweißfrequenz und einem gegenüber einem Grundstrom erhöhten Pulsstrom an den abschmelzenden Schweißdraht gelegt, wodurch es zu einer Einschnürung ("Pinch-Effekt") des Tropfens und schließlich zur Ablösung von Tropfen abgeschmolzenen Schweißdrahtmaterials kommt. Idealerweise findet der Übergang des Tropfens vom Ende des Schweißdrahts zum Werkstück "fliegend" ohne Bildung eines Kurzschlusses zwischen Schweißdraht und Werkstück statt. Insbesondere bei geringen Abständen zwischen dem freien Ende des Schweißdrahts und der Oberfläche des zu verschweißenden Werkstücks, also bei kurzen Längen des Lichtbogens, können Kurzschlüsse zwischen Schweißdraht und Schmelzbad während der Ablösung des Tropfens aus geschmolzenem Material des Schweißdrahts nicht vermieden werden. Je näher der Ansatzpunkt des Lichtbogens dem Schmelzbad am Werkstück kommt, desto wahrscheinlicher wird die Bildung derartiger Kurzschlüsse zwischen Schweißdraht und Werkstück. Üblicherweise lösen sich derartige Kurzschlüsse auch ohne Änderung des Schweißstromes von selbst auf, bevor es zu Schweißfehlern und Prozessstörungen kommt. Dies ist insbesondere bei größeren Lichtbogenlängen der Fall. Bei geringeren Lichtbogenänderungen können jedoch durch eine geringere Einschnürung des Tropfens die Kurzschlüsse länger andauern und nicht selbständig gelöst werden. In diesen Fall wird der Kurzschluss durch eine Erhöhung des Schweißstroms aufgebrochen. Durch die Stromerhöhung zum Aufbrechen des Kurzschlusses kommt es zu Schweißspritzern und Instabilitäten des Schweißprozesses, welche die Qualität der Schweißung negativ beeinflussen. Wichtig ist es, den Kurzschluss spätestens vor dem nächsten Stromimpuls aufzulösen, da sich sonst die Schweißspritzer und Instabilitäten besonders stark auswirken.

Die EP 1 677 941 B2 beschreibt ein Verfahren zur Regelung eines Impulslichtbogenschweißprozesses, bei dem die Position des Endes des Schweißdrahts zum Werkstück bestimmt wird und somit eine genaue Regelung der Lichtbogenlänge realisiert werden kann. Ein Kurzschluss zwischen Schweißdraht und Werkstück wird erfasst. Nach einem Aufbruch des Kurzschlusses kann der Schweißdraht vom Werkstück auf einen fix vorgegebenen oder einstellbaren Abstand wegbewegt werden.

Die Aufgabe der vorliegenden Erfindung besteht darin, ein oben genanntes Verfahren und eine oben genannte Schweißvorrichtung zu schaffen, wodurch allenfalls auftretende Kurzschlüsse zwischen Schweißdraht und Werkstück möglichst kurz bzw. konstant oder stabil gehalten werden können, sodass die Schweißqualität und die Stabilität des Schweißprozesses möglichst wenig beeinträchtigt wird. Dies soll möglichst ohne Stromimpulse oder zumindest ohne starke Stromimpulse sichergestellt werden. Der dafür notwendige Aufwand soll möglichst gering sein. Nachteile des Standes der Technik sollen vermieden oder zumindest reduziert werden.

Gelöst wird die erfindungsgemäße Aufgabe durch ein oben genanntes Verfahren zum Steuern und/oder Regeln eines Impulslichtbogenschweißprozesses, bei dem der Schweißdraht mit einer vorgegebenen Rückwärtsgeschwindigkeit vom Werkstück wegbewegt wird, nachdem ein Kurzschluss zwischen Schweißdraht und Werkstück detektiert wird, und der Schweißdraht wieder in Richtung Werkstück bewegt wird, nachdem ein Aufbrechen des Kurzschlusses zwischen Schweißdraht und Werkstück detektiert wird. Erfindungsgemäß wird bei Erkennung eines Kurzschlusses zwischen Schweißdraht und Werkstück der Schweißdraht mit einer definierten Rückwärtsendgeschwindigkeit vom Werkstück wegbewegt und dadurch die Auflösung des entstandenen Kurzschlusses unterstützt. Dies umso schneller, je größer die Beschleunigung der Vorschubgeschwindigkeit des Schweißdrahts von der üblichen Vorwärtsbewegung zur Rückwärtsbewegung erfolgt und je höher die definierte Rückwärtsgeschwindigkeit ist. Sobald der Kurzschluss aufgebrochen ist, wird die Bewegung des Schweißdrahts wieder in Vorwärtsrichtung, also in Richtung Werkstück, geändert. Notwendig dafür ist lediglich die Möglichkeit der Detektion des Kurzschlusses zwischen Schweißdraht und Werkstück, was durch die üblicherweise ohnedies erfassten Schweißparameter, insbesondere die Schweißspannung bzw. Lichtbogenspannung einfach implementiert werden kann. Zusätzlich ist eine geeignete Vorschubvorrichtung zum Fördern des Schweißdrahts notwendig, welche eine dynamische Bewegung des Schweißdrahts in Richtung Werkstück sowie vom Werkstück weg ermöglicht. Hochdynamische Antriebe können beispielsweise durch getriebelose Direktmotoren, welche sich direkt im Schweißbrenner befinden, realisiert werden. Das erfindungsgemäße Steuerungs- bzw. Regelungsverfahren trägt dazu bei, die insbesondere bei sehr kurzen Längen des Lichtbogens bei Impulslichtbogenschweißprozessen unweigerlich auftretenden Kurzschlüsse zwischen Schweißdraht und Schmelzbad möglichst konstant und stabil zu halten, sodass die Schweißqualität sowie die Stabilität des Schweißprozesses möglichst wenig beeinträchtigt wird. Insbesondere kann durch die Rückwärtsbewegung des Schweißdrahts verhindert werden, dass der Kurzschluss beim Einsetzen des nächsten Stromimpulses noch besteht, was besonders negative Einflüsse auf die Qualität der Schweißnaht haben würde.

Der Kurzschluss zwischen Schweißdraht und Werkstück wird vorzugsweise durch einen Einbruch der Schweißspannung, insbesondere eine Unterschreitung der Schweißspannung unter einen vorgegebenen Spannungsgrenzwert, detektiert. Der vorgegebene Spannungsgrenzwert kann beispielsweise 12 V betragen und in Abhängigkeit der verwendeten Materialien und dem Schweißdrahtdurchmesser variiert werden.

Gemäß einem weiteren Merkmal der Erfindung wird der Schweißdraht mit einer vorgegebenen Rückwärtsgeschwindigkeit vom Werkstück wegbewegt, welche dem 1 bis 100 fachen der vorgegebenen Vorwärtsgeschwindigkeit entspricht. Je höher die Rückwärtsgeschwindigkeit und die Beschleunigung, desto rascher wird ein erkannter Kurzschluss aufgebrochen werden. Dafür werden entsprechend höhere Anforderungen an den Drahtvorschub gestellt.

Nachdem das Aufbrechen des Kurzschlusses zwischen Schweißdraht und Werkstück detektiert wird, wird der Schweißdraht vorzugsweise wieder mit der vorgegebenen Vorwärtsgeschwindigkeit in Richtung Werkstück bewegt. Dies stellt die einfachste Realisierungsmöglichkeit des Verfahrens dar.

Alternativ dazu kann der Schweißdraht auch eine vorgegebene erste Zeitdauer und bzw. oder eine vorgegebene erste Wegstrecke mit einer vorgegebenen ersten erhöhten Vorwärtsgeschwindigkeit in Richtung Werkstück bewegt werden und danach wieder mit der vorgegebenen Vorwärtsgeschwindigkeit in Richtung Werkstück bewegt werden, nachdem das Aufbrechen des Kurzschlusses zwischen Schweißdraht und Werkstück detektiert wird. Durch diese Maßnahme kann ein größerer Abstand zwischen Ende des Schweißdrahts und Werkstück und somit eine größere Länge des Lichtbogens beim Wiederzünden des Lichtbogens nach der kurzzeitigen Rückwärtsbewegung des Schweißdrahts verhindert bzw. ausgeglichen werden. Der Steuerungs- bzw. Regelungsaufwand wird dadurch etwas erhöht.

Wenn der Schweißdraht mit einer vorgegebenen zweiten erhöhten Vorwärtsgeschwindigkeit in Richtung Werkstück bewegt wird, bevor ein Kurzschluss zwischen Schweißdraht und Werkstück detektiert wird, kann der Kurzschluss erzwungen werden und somit stabil bzw. konstant gehalten werden.

Dabei wird die vorgegebene zweite erhöhte Vorschubgeschwindigkeit des Schweißdrahts vorzugsweise durch den Beginn des Stromimpulses getriggert, indem eine vorgegebene zweite Zeitdauer vor oder nach dem Beginn des Stromimpulses die vorgegebene zweite erhöhte Vorschubgeschwindigkeit vorgegeben wird. Durch die raschere Bewegung des Schweißdrahts in Richtung Werkstück wird die Länge des Lichtbogens verringert und der Eintritt des Kurzschlusses möglichst bald nach Auftreten des Stromimpulses bzw. nach Ablösung des Tropfens vom Schweißdraht unterstützt. Die Dauer der Bewegung des Schweißdrahts mit der vorgegebenen zweiten erhöhten Vorschubgeschwindigkeit kann durch eine vorgegebene dritte Zeitdauer oder eine vorgegebene zweite Wegstrecke festgelegt werden.

Vorteilhafterweise wird der Schweißdraht mit einer 1 bis 100 mal höheren ersten erhöhten oder zweiten erhöhten Vorwärtsgeschwindigkeit als der vorgegebenen Vorwärtsgeschwindigkeit in Richtung Werkstück bewegt.

Gemäß einer Ausbildung des erfindungsgemäßen Verfahrens ist vorgesehen, dass der Schweißdraht die vorgegebene erste Zeitdauer und bzw. oder vorgegebene erste Wegstrecke mit der vorgegebenen ersten erhöhten Vorwärtsgeschwindigkeit in Richtung Werkstück bewegt wird, welche von der Zeitdauer der Rückwärtsbewegung des Schweißdrahts nach dem Detektieren des Kurzschlusses abhängig ist, vorzugsweise 50 % bis 95 %, besonders bevorzugt 70 % bis 80 %, der Zeitdauer der Rückwärtsbewegung des Schweißdrahts. Die Dauer, während welcher der Schweißdraht mit der vorgegebenen ersten erhöhten Vorwärtsgeschwindigkeit bewegt wird, wird also abhängig von der Dauer der Rückwärtsbewegung des Schweißdrahts nach Erkennung des Kurzschlusses des Schweißdrahts mit dem Werkstück gestaltet.

Wenn eine vorgegebene erste Zeitverzögerung gewartet wird, nachdem ein Kurzschluss zwischen Schweißdraht und Werkstück detektiert wird, und erst danach der Schweißdraht mit der vorgegebenen Rückwärtsgeschwindigkeit vom Werkstück wegbewegt wird, wenn der Kurzschluss nach wie vor detektiert wird, kann eine irrtümliche Detektion eines Kurzschlusses verhindert werden. Es wird also über diese erste vorgegebene und einstellbare Zeitverzögerung des Beginns der Rückwärtsbewegung des Schweißdrahts eine Umkehrung der Schweißdrahtbewegung verhindert, wenn nur ganz kurze Kurzschlüsse auftreten, welche von selbst wieder aufbrechen. Ideale Werte für die vorgegebene erste Zeitverzögerung liegen beispielsweise im Bereich zwischen 0,1 ms und 0,5 ms.

Ebenso kann eine gewisse vorgegebene zweite Zeitverzögerung gewartet werden, nachdem das Aufbrechen des Kurzschlusses zwischen Schweißdraht und Werkstück detektiert wird, und erst dann der Schweißdraht wieder in Richtung Werkstück bewegt werden, wenn nach wie vor ein Aufbruch des Kurzschlusses detektiert wird. Über diese zweite vorgegebene und einstellbare Zeitverzögerung des Beginns der Vorwärtsbewegung nach der Rückwärtsbewegung des Schweißdrahts kann die Rückwärtsbewegung noch eine gewisse Zeit aufrechterhalten werden, um sicherzustellen, dass die Schweißdrahtbewegung erst bei einem sicheren Aufbrechen des Kurzschlusses wieder in Richtung Werkstück umgekehrt wird. Ideale Werte für die vorgegebene zweite Zeitverzögerung können beispielsweise auch im Bereich zwischen 0,1 ms und 0,5 ms liegen.

Der Schweißstrom kann während der Rückwärtsbewegung des Schweißdrahts während des Kurzschlusses zwischen dem Schweißdraht und dem Werkstück auf einen höheren Kurzschlussstrom als den Grundstrom erhöht oder auch auf einen niedrigeren Kurzschlussstrom als den Grundstrom reduziert werden.

Die Erhöhung kann insbesondere 10 % bis 90 % gegenüber dem voreingestellten Grundstrom, die Reduktion ebenfalls insbesondere 10 % bis 90 % gegenüber dem voreingestellten Grundstrom betragen.

Üblicherweise beträgt die Schweißfrequenz, mit der die Stromimpulse periodisch angelegt werden, zwischen 1 Hz und 500 Hz. Entsprechend der eingesetzten Schweißfrequenz beträgt die Periodendauer zwischen 2 ms und 1 s. Dementsprechend muss sichergestellt werden, dass ein auftretender Kurzschluss spätestens mit Auftreten des nächsten Stromimpulses aufgebrochen wird. Dies kann mit den bereits oben erwähnten hochdynamischen Vorschubmotoren, beispielsweise Direktantrieben realisiert werden.

Geeignete Werte der Rückwärtsgeschwindigkeit des Schweißdrahts liegen zwischen 1 m/min und 120 m/min, insbesondere zwischen 15 m/min und 50 m/min.

Geeignete Werte der Beschleunigung des Schweißdrahts liegen zwischen 33,3 m/s² und 4000 m/s², insbesondere zwischen 500 m/s² und 750 m/s². Höhere Werte erfordern hochdynamische Vorschubmotoren, beispielsweise getriebelose Direktantriebe.

Gelöst wird die erfindungsgemäße Aufgabe auch durch eine oben erwähnte Schweißvorrichtung, deren Steuereinrichtung zum Steuern und/oder Regeln eines oben beschriebenen Verfahrens ausgebildet ist. Zu den dadurch erzielbaren Vorteilen wird auf die obige Beschreibung des Verfahrens zum Steuern und/oder Regeln eines Impulslichtbogenschweißprozesses verwiesen. Da das beschriebene Verfahren maßgeblich in Form von Software implementiert wird, hält sich der entsprechende Aufwand und somit die Kosten in Grenzen.

Die vorliegende Erfindung wird anhand der beigefügten Zeichnungen näher erläutert. Darin zeigen:

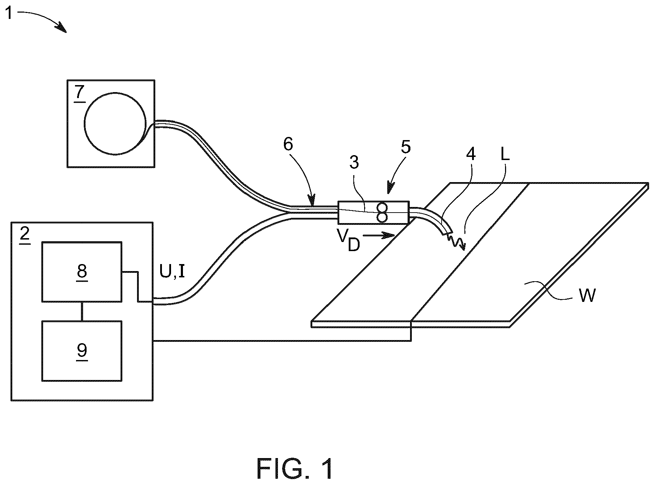

- Fig. 1: ein Blockschaltbild einer Schweißvorrichtung zur Durchführung eines Impulslichtbogenschweißprozesses mit einem abschmelzenden Schweißdraht nach dem Stand der Technik;

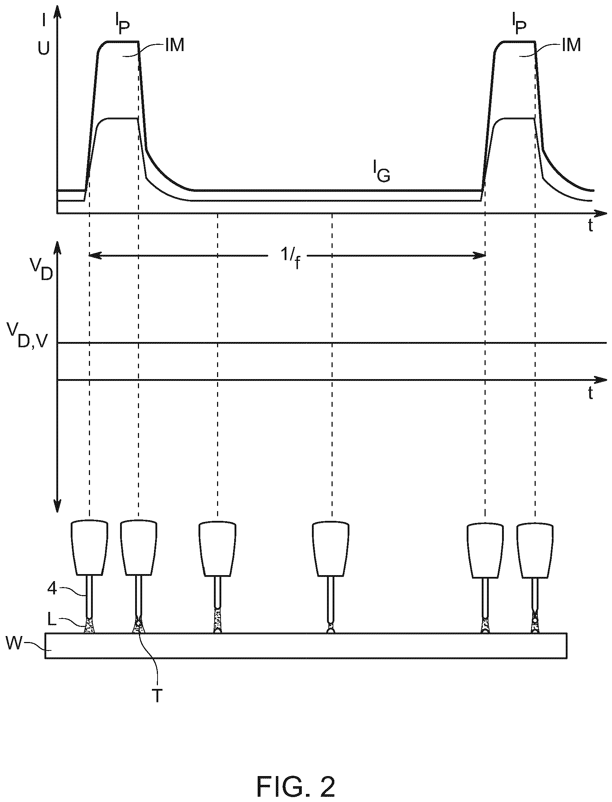

- Fig. 2: die zeitlichen Verläufe des Schweißstroms, der Schweißspannung, der Drahtvorschubgeschwindigkeit und der Position des Endes des Schweißdrahts in Bezug auf das Werkstück bei einem idealen Impulslichtbogenschweißprozess;

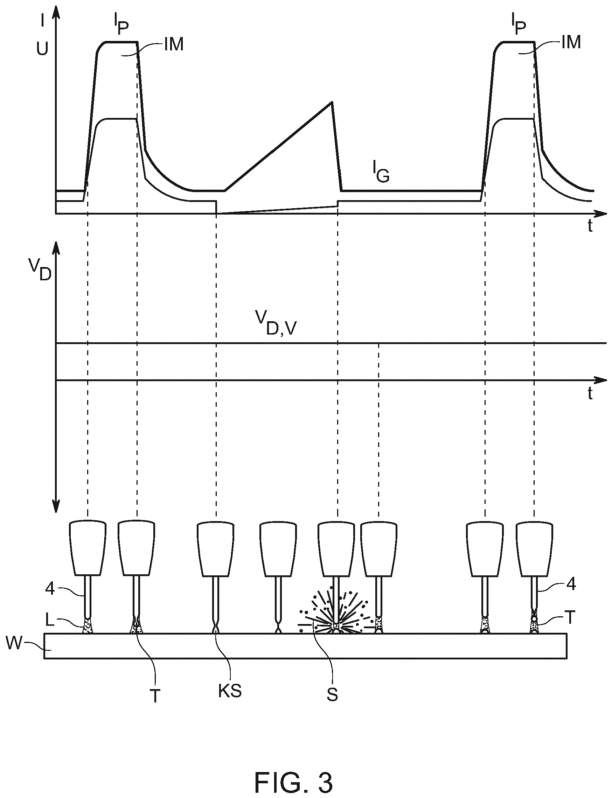

- Fig. 3: die zeitlichen Verläufe des Schweißstroms, der Schweißspannung, der Drahtvorschubgeschwindigkeit und der Position des Endes des Schweißdrahts in Bezug auf das Werkstück bei einem Impulslichtbogenschweißprozess mit einem unerwünscht lange auftretendem Kurzschluss zwischen Schweißdraht und Werkstück und eine Stromerhöhung zum Aufbrechen des Kurzschlusses nach dem Stand der Technik;

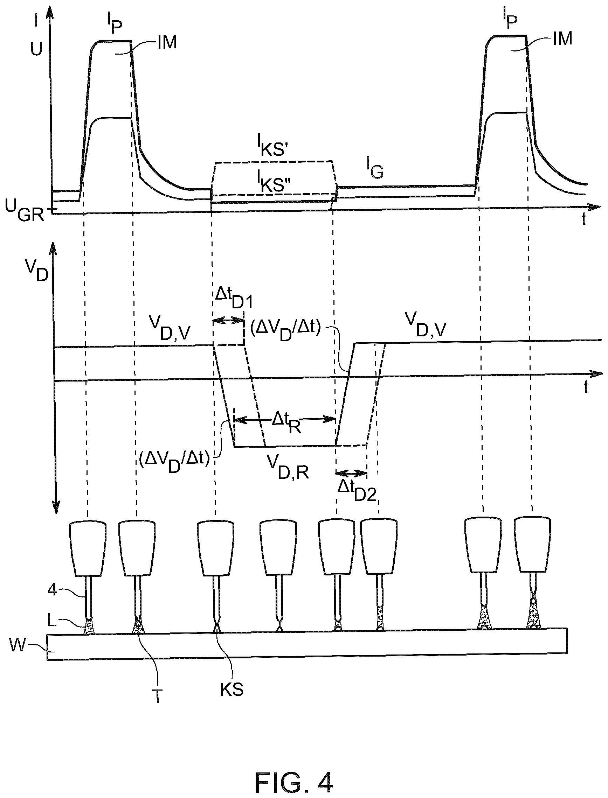

- Fig. 4: die zeitlichen Verläufe des Schweißstroms, der Schweißspannung, der Drahtvorschubgeschwindigkeit und der Position des Endes des Schweißdrahts in Bezug auf das Werkstück bei einem Impulslichtbogenschweißprozess unter Verwendung einer ersten Ausführungsform des erfindungsgemäßen Verfahrens bei einem auftretenden Kurzschluss zwischen Schweißdraht und Werkstück;

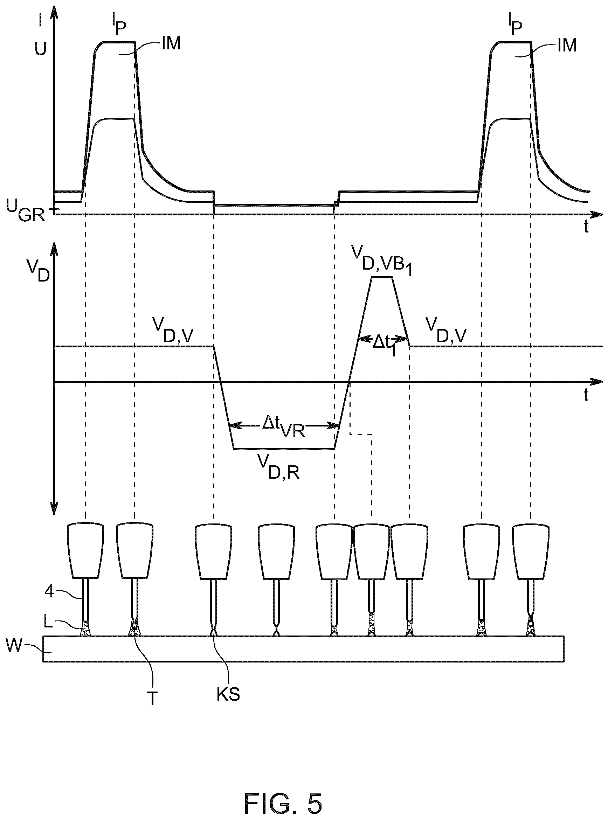

- Fig. 5: die zeitlichen Verläufe des Schweißstroms, der Schweißspannung, der Drahtvorschubgeschwindigkeit und der Position des Endes des Schweißdrahts in Bezug auf das Werkstück bei einem Impulslichtbogenschweißprozess unter Verwendung einer weiteren Ausführungsform des erfindungsgemäßen Verfahrens bei einem auftretenden Kurzschluss zwischen Schweißdraht und Werkstück;

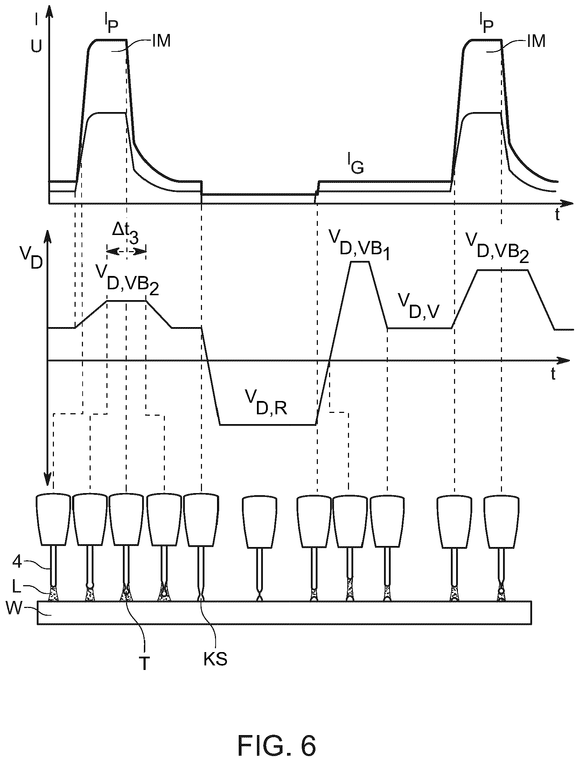

- Fig. 6: die zeitlichen Verläufe des Schweißstroms, der Schweißspannung, der Drahtvorschubgeschwindigkeit und der Position des Endes des Schweißdrahts in Bezug auf das Werkstück bei einem Impulslichtbogenschweißprozess unter Verwendung einer weiteren Ausführungsform des erfindungsgemäßen Verfahrens, bei dem die Bildung eines Kurzschlusses zwischen Schweißdraht und Werkstück durch eine raschere Vorwärtsbewegung des Schweißdrahts erzwungen wird, ; und

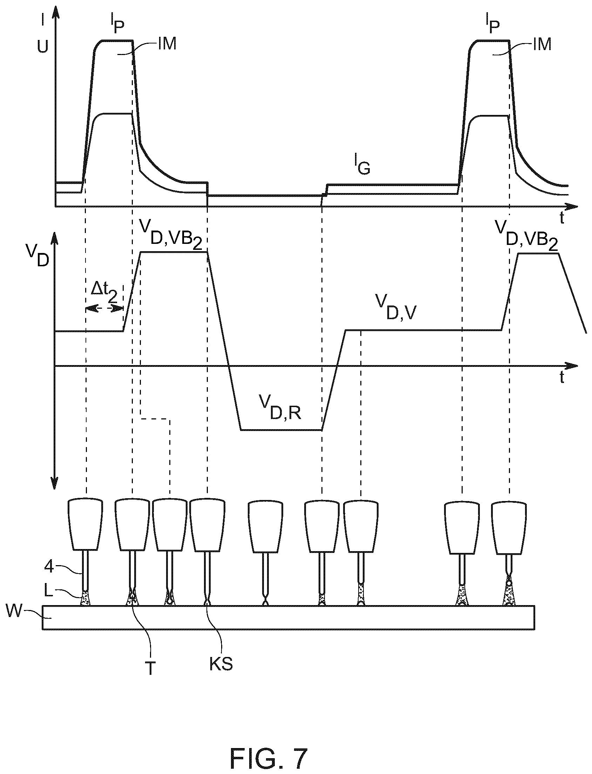

- Fig. 7: eine Variante des Verfahrens gemäß Fig. 6.

Fig. 1 zeigt ein Blockschaltbild einer Schweißvorrichtung 1 zur Durchführung eines Impulslichtbogenschweißprozesses mit einem abschmelzenden Schweißdraht 4 nach dem Stand der Technik. Der Schweißbrenner 3 ist über ein Schlauchpaket 6 mit einer Schweißstromquelle 2 und einer Drahtrolle 7 für den abschmelzenden Schweißdraht 4 verbunden. In der Schweißstromquelle 2 befindet sich ein Leistungsteil 8, welches den notwendigen Schweißstrom I und die Schweißspannung U bereitstellt und an den Schweißdraht 4 im Schweißbrenner 3 liefert. Eine Steuereinrichtung 9 stellt die notwendigen Parameter für den Schweißprozess zur Verfügung und steuert bzw. regelt den Schweißprozess entsprechend. Während des Schweißprozesses brennt zwischen dem freien Ende des Schweißdrahts 4 und dem Werkstück W ein Lichtbogen L. Beim Impulslichtbogenschweißen werden periodisch Stromimpulse IM mit einem erhöhten Pulsstrom I_{P} an den abschmelzenden Schweißdraht 4 gelegt, wodurch es zu einer Einschnürung ("Pinch-Effekt") des Tropfens aufgrund des entstehenden Magnetfelds und schließlich zur Ablösung von Tropfen T des abgeschmolzenen Schweißdrahtmaterials und ein Übergang ins Schmelzbad am Werkstück W kommt.

Fig. 2 zeigt die zeitlichen Verläufe des Schweißstroms I, der Schweißspannung U, der Drahtvorschubgeschwindigkeit v_{D} und der Position des Endes des Schweißdrahts 4 in Bezug auf das Werkstück W bei einem idealen Impulslichtbogenschweißprozess. Entsprechend einer vorgegebenen Schweißfrequenz f bzw. Impulsfrequenz werden periodisch Stromimpulse IM mit einem gegenüber dem Grundstrom I_{G} erhöhten Pulsstrom I_{P} an den abschmelzenden Schweißdraht 4 gelegt, wodurch es zur Einschnürung und Ablösung des Tropfens T abgeschmolzenen Schweißdrahtmaterials kommt. Dabei findet der Übergang des Tropfens T vom Ende des Schweißdrahts 4 zum Werkstück W "fliegend" ohne Bildung eines Kurzschlusses KS zwischen Schweißdraht 4 und Werkstück W statt. Der Lichtbogen L brennt permanent zwischen dem Ende des Schweißdrahts 4 und der Oberfläche des Werkstücks W und der Schweißdraht 4 wird mit einer konstanten Vorwärtsgeschwindigkeit v_{D,V} in Richtung Werkstück W bewegt.

Fig. 3 zeigt die zeitlichen Verläufe des Schweißstroms I, der Schweißspannung U, der Drahtvorschubgeschwindigkeit v_{D} und der Position des Endes des Schweißdrahts 4 in Bezug auf das Werkstück W bei einem Impulslichtbogenschweißprozess mit unerwünscht lange auftretendem Kurzschluss KS zwischen Schweißdraht 4 und Werkstück W. Nach dem Auftreten des Kurzschlusses KS zwischen Schweißdraht 4 und Werkstück W, was durch einen Einbruch der Schweißspannung U detektiert werden kann, wird der Schweißstrom I beispielsweise rampenförmig erhöht, um ein Aufbrechen des Kurzschlusses KS zu bewirken oder zu unterstützen. Beim Aufbrechen des Kurzschlusses KS kommt es aufgrund des höheren Schweißstroms I zu Schweißspritzern S, welche die Qualität und Stabilität des Schweißprozesses negativ beeinflussen. Nach dem Aufbrechen des Kurzschlusses KS wird der Schweißprozess wieder mit dem Grundstrom I_{G} fortgesetzt, bis entsprechend der Schweißfrequenz f der nächste Stromimpuls IM mit dem Pulsstrom I_{P} angelegt wird, um den nächsten Tropfen T vom Schweißdraht 4 abzulösen.

Fig. 4 zeigt die zeitlichen Verläufe des Schweißstroms I, der Schweißspannung U, der Drahtvorschubgeschwindigkeit v_{D} und der Position des Endes des Schweißdrahts 4 in Bezug auf das Werkstück W bei einem Impulslichtbogenschweißprozess unter Verwendung einer ersten Ausführungsform des erfindungsgemäßen Verfahrens bei einem unerwünscht auftretendem Kurzschluss KS zwischen Schweißdraht 4 und Werkstück W. Erfindungsgemäß wird nach der Detektion eines Kurzschlusses KS der Schweißdraht 4 mit einer vorgegebenen Rückwärtsgeschwindigkeit v_{D,R} vom Werkstück W wegbewegt. Die vorgegebenen Rückwärtsgeschwindigkeit v_{D,R} kann beispielsweise dem 1 bis 100 fachen der vorgegebenen Vorwärtsgeschwindigkeit v_{D,V} entsprechen, beispielsweise zwischen 1 m/min und 120 m/min, insbesondere zwischen 15 m/min und 50 m/min, betragen. Die Detektion des Kurzschlusses KS zwischen Schweißdraht 4 und Werkstück W erfolgt einfach über Erkennung eines Einbruchs der Schweißspannung U, insbesondere einer Unterschreitung der Schweißspannung U unter einen vorgegebenen Spannungsgrenzwert U_{GR}, beispielsweise von 12 V. Der Schweißdraht 4 wird mit der vorgegebenen Rückwärtsgeschwindigkeit v_{D,R} so lange vom Werkstück W wegbewegt, bis der Kurzschluss KS aufbricht, was beispielsweise wieder über die Schweißspannung U bzw. ein Überschreiten des vorgegebenen Spannungsgrenzwerts U_{GR} erkannt wird. Nach dem Aufbrechen des Kurzschlusses KS zwischen Schweißdraht 4 und Werkstück W wird der Schweißdraht 4 wieder in Richtung Werkstück W bewegt. Im dargestellten Ausführungsbeispiel erfolgt die Vorwärtsbewegung des Schweißdrahts 4 wieder mit der vorgegebenen Vorwärtsgeschwindigkeit v_{D,V} welche vor dem Kurzschluss KS verwendet wurde. Der Wechsel der Vorschubgeschwindigkeit v_{D} des Schweißdrahts 4 von der vorgegebenen Vorwärtsgeschwindigkeit v_{D,V} zur vorgegebenen Rückwärtsgeschwindigkeit v_{D,R} und der Wechsel von der vorgegebenen Rückwärtsgeschwindigkeit v_{D,R} zur vorgegebenen Vorwärtsgeschwindigkeit v_{D,V} zurück geschieht dabei möglichst rasch, also mit einer Beschleunigung (v_{D}/Δt_{D}) von vorzugsweise 33,3 m/s² bis 4000 m/s², insbesondere von 500 m/s² bis 750 m/s². Dies ist mit hochdynamischen Vorschubmotoren, beispielsweise getriebelosen Direktantrieben, möglich.

Während der Rückwärtsbewegung des Schweißdrahts 4 während des Kurzschlusses KS zwischen Schweißdraht 4 und Werkstück W kann der Schweißstrom I auf einen höheren Kurzschlussstrom I_{KS'} als dem Grundstrom I_{G} vor dem Kurzschluss KS, insbesondere einen um 10 % bis 90 % gegenüber dem voreingestellten Grundstrom I_{G} höheren Kurzschlussstrom I_{KS'} erhöht werden. Dadurch kann die Dauer des Kurzschlusses KS reduziert werden und der Druck des Lichtbogens nach der Wiederzündung erhöht werden. Ebenso kann während der Rückwärtsbewegung des Schweißdrahts 4 der Schweißstrom I auf einen niedrigeren Kurzschlussstrom I_{KS"} als dem Grundstrom I_{G} vor dem Kurzschluss KS, insbesondere auf einen um 10 % bis 90 % gegenüber dem voreingestellten Grundstrom I_{G} niedrigeren Kurzschlussstrom I_{KS"} reduziert werden. Dadurch können die Schweißspritzer reduziert werden. Die Wahl der Amplitude des höheren Kurzschlussstromes I_{KS'} und des niedrigeren Kurzschlussstromes I_{KS"} hängt von vielen Faktoren, insbesondere dem verwendeten Material oder Schutzgas, dem Arbeitspunkt und der Kennliniencharakteristik ab. Durch eine Stromerhöhung kann sichergestellt werden, dass der Kurzschluss KS rechtzeitig aufbricht und die Stabilität des Systems gewährleistet wird.

Gemäß einer strichliert eingezeichneten Variante kann eine vorgegebene erste Zeitverzögerung Δt_{D1}, vorzugsweise 0,1 ms bis 0,5 ms, gewartet werden, nachdem ein Kurzschluss KS zwischen Schweißdraht 4 und Werkstück W detektiert wird, und erst danach der Schweißdraht 4 mit der vorgegebenen Rückwärtsgeschwindigkeit v_{D,R} vom Werkstück W wegbewegt werden, wenn der Kurzschluss KS nach wie vor detektiert wird. Dadurch kann eine irrtümliche Detektion eines Kurzschlusses KS verhindert werden oder eine Umkehrung der Schweißdrahtbewegung verhindert werden, wenn nur ganz kurze Kurzschlüsse KS auftreten.

Weiters kann optional auch eine vorgegebene zweite Zeitverzögerung Δt_{D2}, vorzugsweise 0,1 ms bis 0,5 ms, gewartet werden, nachdem das Aufbrechen des Kurzschlusses KS zwischen Schweißdraht 4 und Werkstück W detektiert wird, und erst danach der Schweißdraht 4 wieder in Richtung Werkstück W bewegt werden, wenn nach wie vor ein Aufbruch des Kurzschlusses KS detektiert wird. Über diese zweite vorgegebene und einstellbare Zeitverzögerung Δt_{D2} des Beginns der Vorwärtsbewegung nach der Rückwärtsbewegung des Schweißdrahts 4 kann die Rückwärtsbewegung noch eine gewisse Zeit aufrechterhalten werden, um sicherzustellen, dass die Schweißdrahtbewegung erst bei einem sicheren Aufbrechen des Kurzschlusses KS wieder in Richtung Werkstück W umgekehrt wird. Die erste Zeitverzögerung Δt_{D1} und die zweite Zeitverzögerung Δt_{D2} können voneinander unabhängig eingestellt werden. Die Wahl der ersten Zeitverzögerung Δt_{D1} und der zweiten Zeitverzögerung Δt_{D2} hängt auch vom Arbeitspunkt, also den Betriebsbedingungen (Spannung U, Strom I sowie anderen Kennliniencharakteristiken) des Systems, ab. Je nach Arbeitspunkt kann es vorteilhaft sein, den Strom I später oder früher zu erhöhen, da die Zeit im Grundstrom I_{G} begrenzt ist.

Fig. 5 zeigt die zeitlichen Verläufe des Schweißstroms I, der Schweißspannung U, der Drahtvorschubgeschwindigkeit v_{D} und der Position des Endes des Schweißdrahts 4 in Bezug auf das Werkstück W bei einem Impulslichtbogenschweißprozess unter Verwendung einer weiteren Ausführungsform des erfindungsgemäßen Verfahrens bei einem auftretenden Kurzschluss KS zwischen Schweißdraht 4 und Werkstück W. Bei dieser Variante wird der Schweißdraht 4 eine vorgegebene erste Zeitdauer Δt₁ und bzw. oder eine vorgegebene erste Wegstrecke Δx₁ mit einer vorgegebenen ersten höheren Vorwärtsgeschwindigkeit v_{D,VB1} in Richtung Werkstück W bewegt und danach wieder mit der vorgegebenen Vorwärtsgeschwindigkeit v_{D,V} in Richtung Werkstück W bewegt, nachdem das Aufbrechen des Kurzschlusses KS zwischen Schweißdraht 4 und Werkstück W detektiert wird. Durch diese Maßnahme kann ein größerer Abstand zwischen dem Ende des Schweißdrahts 4 und dem Werkstück W und somit eine größere Länge des Lichtbogens L beim Wiederzünden des Lichtbogens L nach der kurzzeitigen Rückwärtsbewegung des Schweißdrahts 4 verhindert bzw. ausgeglichen werden. Die vorgegebene erste erhöhte Vorwärtsgeschwindigkeit v_{D,VB1} ist beispielsweise 1 bis 100 mal höher als die vorgegebenen Vorwärtsgeschwindigkeit v_{D,V} vor dem Kurzschluss KS.

Die vorgegebene erste Zeitdauer Δt₁ kann von der Zeitdauer Δt_{VR} der Rückwärtsbewegung des Schweißdrahts 4 abhängig gestaltet werden, beispielsweise 50 % bis 95 %, besonders bevorzugt 70 % bis 80 % der Zeitdauer Δt_{VR} der Rückwärtsbewegung des Schweißdrahts 4 betragen. Die selbe Wirkung kann auch über die Wegstrecke Δx, welche der Schweißdraht 4 bei der Rückwärtsbewegung und prozentuell davon wieder in Richtung des Werkstücks W zurücklegt, erzielt werden.

Schließlich zeigt Fig. 6 die zeitlichen Verläufe des Schweißstroms I, der Schweißspannung U, der Drahtvorschubgeschwindigkeit v_{D} und der Position des Endes des Schweißdrahts 4 in Bezug auf das Werkstück W bei einem Impulslichtbogenschweißprozess unter Verwendung einer weiteren Ausführungsform des erfindungsgemäßen Verfahrens, bei dem die Bildung eines Kurzschlusses KS zwischen Schweißdraht 4 und Werkstück W durch eine raschere Vorwärtsbewegung des Schweißdrahts 4 erzwungen wird, um den Lichtbogen L besonders kurz zu halten. Dementsprechend wird der Schweißdraht 4 vor dem erwarteten Kurzschluss KS mit einer vorgegebenen zweiten erhöhten Vorwärtsgeschwindigkeit v_{D,VB2} in Richtung Werkstück W bewegt, bevor ein Kurzschluss KS zwischen Schweißdraht 4 und Werkstück W detektiert wird. Die Vorwärtsbewegung des Schweißdrahts 4 mit der vorgegebenen zweiten erhöhten Vorwärtsgeschwindigkeit v_{D,VB2} erfolgt beispielsweise über eine vorgegebene dritte Zeitdauer Δt₃. Danach wird der Schweißdraht 4 beispielsweise wieder auf die normale, niedrigere Vorwärtsgeschwindigkeit V_{D,V} abgebremst und mit dieser Geschwindigkeit in Richtung Werkstück W bewegt. Dadurch wird die Bildung des Kurzschlusses KS möglichst bald nach dem Stromimpuls IM bzw. der Ablösung des Tropfens erzwungen und der Kurzschluss KS möglichst stabil gehalten. Nach Auflösung des Kurzschlusses KS wird beispielsweise mit dem Schweißprozess gemäß Fig. 5 fortgefahren.

Bei der Variante gemäß Fig. 7 wird die vorgegebene zweite erhöhte Vorschubgeschwindigkeit v_{D,VB2} vom Zeitpunkt des Beginns des Stromimpulses IM getriggert. Die vorgegebene zweite Zeitdauer Δt₂ kann dabei sowohl positiv als auch negativ sein, d.h. die vorgegebene zweite erhöhte Vorschubgeschwindigkeit V_{D,VB2} kann schon vor Beginn des Stromimpulses IM einsetzen oder auch erst danach. Im dargestellten Ausführungsbeispiel gemäß Fig. 7 wird die Vorwärtsbewegung des Schweißdrahts 4 nicht mehr abgebremst, sondern so lange mit der vorgegebenen zweiten erhöhten Vorschubgeschwindigkeit v_{D,VB2} aufrechterhalten, bis ein Kurzschluss KS detektiert wird. Danach wird mit der erfindungsgemäßen Rückwärtsbewegung des Schweißdrahts 4 mit der vorgegebenen Rückwärtsgeschwindigkeit v_{D,R} fortgefahren, bis der Kurzschluss KS aufbricht. Danach wird der Schweißprozess gemäß Fig. 4 fortgesetzt.

Gegenstand der Erfindung ist auch eine Schweißvorrichtung 1 zur Durchführung eines Impulslichtbogenschweißprozesses, mit einer Schweißstromquelle 2, einem Schweißbrenner 3 zur Zuführung eines abschmelzenden Schweißdrahts 4 zu einem Werkstück W und einer Steuereinrichtung 9 zum Steuern und/oder Regeln von Schweißparametern während des Impulslichtbogenschweißprozesses, welche Steuereinrichtung 9 zum Steuern und/oder Regeln eines oben beschriebenen Verfahrens ausgebildet ist.

Die Erfindung vermeidet Qualitätsverluste einer Schweißnaht und Instabilitäten während des Schweißprozesses und ist relativ einfach und kostengünstig implementierbar.

## Patentansprüche

1. Verfahren zum Steuern und/oder Regeln eines Impulslichtbogenschweißprozesses, mit einem abschmelzenden Schweißdraht (4) an einem Werkstück (W), wobei zur Bildung eines Lichtbogens (L) und Ablösung von Tropfen (T) des abgeschmolzenen Schweißdrahts (4) Stromimpulse (IM) periodisch mit einer vorgegebenen Schweißfrequenz (f) und einem gegenüber einem Grundstrom (I_{G}) erhöhten Pulsstrom (I_{P}) angelegt werden, und der abschmelzende Schweißdraht (4) mit einer vorgegebenen Vorwärtsgeschwindigkeit (v_{D,V}) in Richtung Werkstück (W) bewegt wird, **dadurch gekennzeichnet, dass** der Schweißdraht (4) mit einer vorgegebenen Rückwärtsgeschwindigkeit (v_{D,R}) vom Werkstück (W) wegbewegt wird, nachdem ein Kurzschluss (KS) zwischen Schweißdraht (4) und Werkstück (W) detektiert wird, und der Schweißdraht (5) wieder in Richtung Werkstück (W) bewegt wird, nachdem ein Aufbrechen des Kurzschlusses (KS) zwischen Schweißdraht (4) und Werkstück (W) detektiert wird.

2. Verfahren nach Anspruch 1, **dadurch gekennzeichnet, dass** der Schweißdraht (4) mit einer vorgegebenen Rückwärtsgeschwindigkeit (v_{D,R}) vom Werkstück (W) wegbewegt wird, welche dem 1 bis 100 fachen der vorgegebenen Vorwärtsgeschwindigkeit (v_{D,V}) entspricht.

3. Verfahren nach Anspruch 1 oder 2, **dadurch gekennzeichnet, dass** der Schweißdraht (4) wieder mit der vorgegebenen Vorwärtsgeschwindigkeit (v_{D,V}) in Richtung Werkstück (W) bewegt wird, nachdem das Aufbrechen des Kurzschlusses (KS) zwischen Schweißdraht (4) und Werkstück (W) detektiert wird.

4. Verfahren nach Anspruch 1 oder 2, **dadurch gekennzeichnet, dass** der Schweißdraht (4) eine vorgegebene erste Zeitdauer (Δt₁) und bzw. oder eine vorgegebene erste Wegstrecke (Δx₁) mit einer vorgegebenen ersten erhöhten Vorwärtsgeschwindigkeit (v_{D,VB1}) in Richtung Werkstück (W) bewegt wird und danach wieder mit der vorgegebenen Vorwärtsgeschwindigkeit (v_{D,V}) in Richtung Werkstück (W) bewegt wird, nachdem das Aufbrechen des Kurzschlusses (KS) zwischen Schweißdraht (4) und Werkstück (W) detektiert wird.

5. Verfahren nach einem der Ansprüche 1 bis 4, **dadurch gekennzeichnet, dass** der Schweißdraht (4) mit einer vorgegebenen zweiten erhöhten Vorwärtsgeschwindigkeit (v_{D,VB2}) in Richtung Werkstück (W) bewegt wird, bevor ein Kurzschluss (KS) zwischen Schweißdraht (4) und Werkstück (W) detektiert wird.

6. Verfahren nach Anspruch 5, **dadurch gekennzeichnet, dass** der Schweißdraht (4) eine vorgegebene zweite Zeitdauer (Δt₂) vor oder nach dem Beginn des Stromimpulses (IM) und bzw. oder eine vorgegebene dritte Zeitdauer (Δt₃) und bzw. oder eine vorgegebene zweite Wegstrecke (Δx₂) mit der vorgegebenen zweiten erhöhten Vorwärtsgeschwindigkeit (v_{D,VB2}) in Richtung Werkstück (W) bewegt wird, bevor ein Kurzschluss (KS) zwischen Schweißdraht (4) und Werkstück (W) detektiert wird.

7. Verfahren nach einem der Ansprüche 4 bis 6, **dadurch gekennzeichnet, dass** der Schweißdraht (4) mit einer 1 bis 100 mal höheren ersten erhöhten Vorwärtsgeschwindigkeit (v_{D,VB1}) oder zweiten erhöhten Vorwärtsgeschwindigkeit (v_{D,VB2}) als der vorgegebenen Vorwärtsgeschwindigkeit (v_{D,V}) in Richtung Werkstück (W) bewegt wird.

8. Verfahren nach einem der Ansprüche 4 bis 7, **dadurch gekennzeichnet, dass** der Schweißdraht (4) die vorgegebene erste Zeitdauer (Δt₁) und bzw. oder vorgegebene erste Wegstrecke (Δx₁) mit der ersten erhöhten Vorwärtsgeschwindigkeit (v_{D,VB1}) in Richtung Werkstück (W) bewegt wird, welche von der Zeitdauer (Δt_{VR}) der Rückwärtsbewegung des Schweißdrahts (4) nach dem Detektieren des Kurzschlusses (KS) abhängig ist, vorzugsweise 50 % bis 95 %, besonders bevorzugt 70 % bis 80 % der Zeitdauer (Δt_{VR}) der Rückwärtsbewegung des Schweißdrahts (4).

9. Verfahren nach einem der Ansprüche 1 bis 8, **dadurch gekennzeichnet, dass** eine vorgegebene erste Zeitverzögerung (Δt_{D1}), vorzugsweise 0,1 ms bis 0,5 ms, gewartet wird, nachdem ein Kurzschluss (KS) zwischen Schweißdraht (4) und Werkstück (W) detektiert wird, und erst danach der Schweißdraht (4) mit der vorgegebenen Rückwärtsgeschwindigkeit (v_{D,R}) vom Werkstück (W) wegbewegt wird, wenn der Kurzschluss (KS) nach wie vor detektiert wird.

10. Verfahren nach einem der Ansprüche 1 bis 9, **dadurch gekennzeichnet, dass** eine vorgegebene zweite Zeitverzögerung (Δt_{D2}), vorzugsweise 0,1 ms bis 0,5 ms, gewartet wird, nachdem das Aufbrechen des Kurzschlusses (KS) zwischen Schweißdraht (4) und Werkstück (W) detektiert wird, und erst danach der Schweißdraht (5) wieder in Richtung Werkstück (W) bewegt wird, wenn nach wie vor ein Aufbruch des Kurzschlusses (KS) detektiert wird.

11. Verfahren nach einem der Ansprüche 1 bis 10, **dadurch gekennzeichnet, dass** der Schweißstrom (I) während der Rückwärtsbewegung des Schweißdrahts (4) während des Kurzschlusses (KS) des Schweißdrahts (4) mit dem Werkstück (W) auf einen höheren Kurzschlussstrom (I_{KS'}), insbesondere auf einen um 10 % bis 90 % gegenüber dem voreingestellten Grundstrom (I_{G}) höheren Kurzschlussstrom (I_{KS'}), erhöht wird.

12. Verfahren nach einem der Ansprüche 1 bis 10, **dadurch gekennzeichnet, dass** der Schweißstrom (I) während der Rückwärtsbewegung des Schweißdrahts (4) während des Kurzschlusses (KS) des Schweißdrahts (4) mit dem Werkstück (W) auf einen niedrigeren Kurzschlussstrom (I_{KS"}), insbesondere auf einen um 10 % bis 90 % gegenüber dem voreingestellten Grundstrom (I_{G}) niedrigeren Kurzschlussstrom (I_{KS"}), reduziert wird.

13. Verfahren nach einem der Ansprüche 1 bis 12, **dadurch gekennzeichnet, dass** der Schweißdraht (4) mit einer Rückwärtsgeschwindigkeit (v_{D,R}) zwischen 1 m/min und 100 m/min, insbesondere zwischen 15 m/min und 50 m/min, vom Werkstück (W) wegbewegt wird, nachdem der Kurzschluss (KS) zwischen Schweißdraht (4) und Werkstück (W) detektiert wird.

14. Verfahren nach einem der Ansprüche 1 bis 13, **dadurch gekennzeichnet, dass** der Wechsel der Vorschubgeschwindigkeit (v_{D}) des Schweißdrahts (4) mit einer Beschleunigung (Δv_{D/}Δt) zwischen 33,3 m/s² und 4000 m/s², insbesondere zwischen 500 m/s² und 750 m/s² vorgenommen wird.

15. Schweißvorrichtung (1) zur Durchführung eines Impulslichtbogenschweißprozesses, mit einer Schweißstromquelle (2), einem Schweißbrenner (3) zur Zuführung eines abschmelzenden Schweißdrahts (4) zu einem Werkstück (W) und einer Steuereinrichtung (9) zum Steuern und/oder Regeln von Schweißparametern während des Impulslichtbogenschweißprozesses, **dadurch gekennzeichnet, dass** die Steuereinrichtung (9) zum Steuern und/oder Regeln eines Verfahrens nach einem der Ansprüche 1 bis 14 ausgebildet ist.
